# EUROPÄISCHE PATENTSCHRIFT

(11) **EP 3 635 276 B1**
(45) Veröffentlichungstag und Bekanntmachung des Hinweises auf die Patenterteilung: **15.06.2022**
(21) Anmeldenummer: 18725427.1
(22) Anmeldetag: 08.05.2018
(51) Int. Cl.: F16H 25/20, B62D 7/14

(54) **AKTUATOR MIT EINEM SPINDELANTRIEB SOWIE HINTERACHSLENKUNG**
ACTUATOR WITH A SPINDLE DRIVE AND REAR-AXLE STEERING SYSTEM
ACTIONNEUR POURVU D'UN ENTRAÎNEMENT À BROCHE AINSI QU'ESSIEU ARRIÈRE DIRECTEUR

(30) Priorität: 08.06.2017 DE 102017209683
(43) Veröffentlichungstag der Anmeldung: 15.04.2020
(73) Patentinhaber: ZF Friedrichshafen AG, 88046 Friedrichshafen (DE)
(72) Erfinder: SEEVERS, Gerrit, 28816 Stuhr (DE); DE CARVALHO, Miguel, 49448 Quernheim (DE); THOLE, Lars-Theodor, 49393 Lohne (DE)
(74) Vertreter: ZF Friedrichshafen AG
(86) Internationale Anmeldenummer: PCT/EP2018/061742
(87) Internationale Veröffentlichungsnummer: WO 2018/224229

(56) Entgegenhaltungen:
- WO-A1-99/63248
- DE-A1-102015 219 198
- FR-A1- 2 605 280
- US-A- 5 252 015
- US-A- 5 732 596
- US-A1- 2004 250 637

## Beschreibung

Die Erfindung betrifft einen Aktuator mit einem Spindelantrieb, welcher eine Spindel mit einem Spindelgewinde sowie eine Spindelmutter mit einem Muttergewinde aufweist sowie eine Hinterachslenkung.

In der DE10 2015 224 775 A1 ist ein Spindelantrieb offenbart, bei welchem das Spindelgewinde und das Muttergewinde durch ein als lose Mutter ausgebildetes Spannelement in Längsrichtung gegeneinander verspannt sind, wobei die lose Mutter, auch Gewindering genannt, über ein als Tellerfeder ausgebildetes Federelement gegenüber der Spindelmutter abgestützt ist. Durch die Tellerfeder wird eine ständige Vorspannung erzeugt, welche zu einer Anlage der Flanken von Spindel- und Muttergewinde führt und ein Axialspiel beseitigt. DE 10 2015 2119198 A1 offenbart einen Aktuator für eine Hinterachslenkung mit einem Gehäuse in welchem eine Spindelmutter mittels zweier Wälzlager ortsfest und drehbar gelagert ist. Mittels eines Elektromotors wird durch einen Riemenantrieb die Spindelmutter drehbar angetrieben.

Die Erfindung bezweckt eine Verbesserung eines Spindeltriebes der vorgenannten Art sowie einer Hinterachslenkung unter Verwendung eines solchen Spindeltriebes. Die Erfindung umfasst die Merkmale der unabhängigen Patentansprüche. Vorteilhafte Ausgestaltungen ergeben sich aus den Unteransprüchen.

Gemäß Patentanspruch 1 ist vorgesehen, dass das mindestens eine Federelement aus einem Elastomer besteht, wie z.B. einem Kunststoff mit elastischen Eigenschaften. Das Elastomer ist elastisch verformbar und übt bei Verformung eine elastische Rückstellkraft oder Vorspannung aus. Ein Federelement aus einem Elastomer, auch elastomeres Federelement genannt, kann kostengünstig hergestellt werden und weist gegenüber einem metallischen Federelement Gewichtsvorteile auf. Mit dem elastomeren Federelement kann somit eine ständige Vorspannung auf den Gewindering und damit auf die Flanken des Bewegungsgewindes ausgeübt werden. Es wird ein mögliches Axialspiel zwischen Spindelmutter und Spindel beseitigt.

Nach einer bevorzugten Ausführungsform ist das Federelement als Elastomer-Scheibe ausgebildet, d. h. als Scheibe aus einem elastomeren Werkstoff. Die mindestens eine elastomere Scheibe, welche im Radialschnitt etwa die Abmessungen des Gewinderinges, d. h. etwa gleiche Stirnflächen aufweist, ist zwischen Gewindering und Spindelmutter angeordnet.

Nach einer weiteren bevorzugten Ausführungsform ist der Gewindering axial gleitend in der Spindelmutter, jedoch drehfest gegenüber der Spindelmutter angeordnet. Der Gewindering ist somit mit der Spindelmutter synchronisiert. Die Mitnahmeverbindung zwischen Gewindering und Spindelmutter kann vorzugsweise über einen am Umfang des Gewinderinges angeordneten Zylinderstift erfolgen, welcher gleichzeitig in die Spindelmutter eingreift.

Nach einer weiteren bevorzugten Ausführungsform weist die Spindelmutter ein Axial-Widerlager auf, welches vorzugsweise als Bund ausgebildet ist. Der Gewindering sowie die mindestens eine Elastomer-Scheibe werden mittels eines Einstellringes gegen das Widerlager verspannt mit der Wirkung, dass die mindestens eine Elastomer-Scheibe verformt und somit eine Vorspannung in axialer Richtung erzeugt wird. Vorzugsweise sind zwei Elastomer-Scheiben beiderseits des Gewinderinges vorgesehen, wobei die erste Elastomer-Scheibe am Widerlager und die zweite Elastomer-Scheibe am Einstellring anliegt.

Nach einer weiteren bevorzugten Ausführungsform weist der Einstellring ein Außengewinde und die Spindelmutter ein Innengewinde auf, in welches der Einstellring mit seinem Außengewinde einschraubbar ist. Damit kann die gewünschte Vorspannung in axialer Richtung stufenlos eingestellt werden.

Nach einer weiteren bevorzugten Ausführungsform ist der Einstellring über ein Sicherungselement gegen Losdrehen gesichert. Damit wird der Vorteil erreicht, dass die eingestellte Vorspannung im Betrieb erhalten bleibt.

Nach einer weiteren bevorzugten Ausführungsform ist das Sicherungselement als verformbarer Ring, beispielsweise als Blechring ausgebildet, welcher einerseits formschlüssig in den Einstellring und andererseits formschlüssig in den Umfang der Spindelmutter eingreift. Der verformbare Ring, auch Sicherungsring genannt, wird somit über den Einstellring sowie über das Stirnende der Spindelmutter geschoben und anschließend zur Erzielung eines Formschlusses verformt, beispielsweise mit der Spindelmutter vercrimpt.

Nach einer weiteren bevorzugten Ausführungsform ist an dem Einstellring, welcher vorzugsweise einen L-förmigen Querschnitt aufweist, ein Abstreifelement befestigt, welches in das Spindelgewinde eingreift. Damit kann eine Abdichtung des Fettraumes innerhalb der Spindelmutter erzielt, d. h. ein Austreten von Schmierstoff verhindert werden.

Die Erfindung betrifft des Weiteren eine Hinterachslenkung mit einem Aktuator und einem Spindeltrieb nach einem der vorhergehenden Ansprüche.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
Fig. 1 einen Spindelantrieb mit Spindel, Spindelmutter und Gewindering und
Fig. 2 eine Explosivdarstellung des Spindelantriebes mit seinen Einzelteilen.

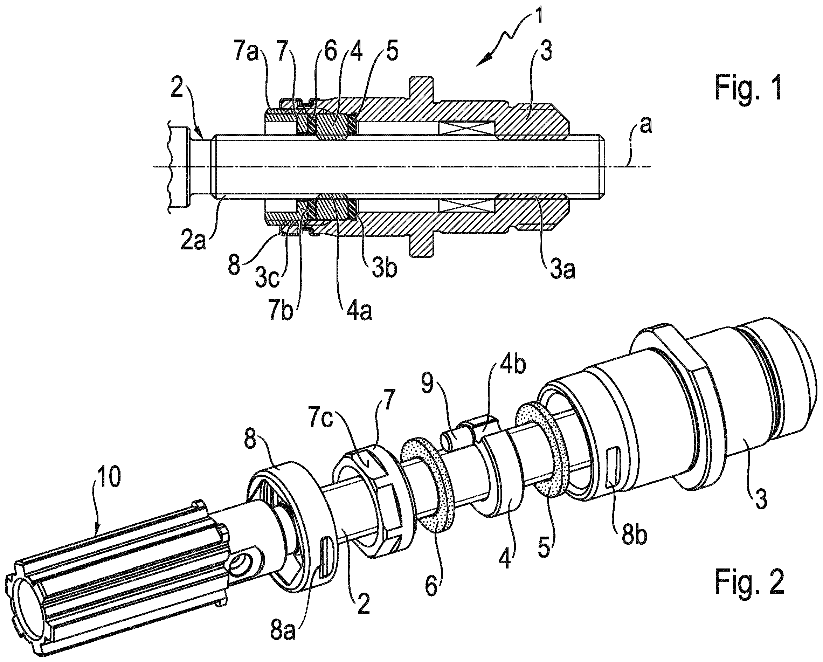

Fig. 1 zeigt einen Spindelantrieb 1, welcher eine Spindel 2 mit einem Spindelgewinde 2a sowie eine Spindelmutter 3 mit einem Muttergewinde 3a umfasst. Der Spindelantrieb 1 ist eine Komponente eines nicht dargestellten Aktuators, wie er in der eingangs genannten DE 10 2015 224 775 A1, s. dort Fig. 3 und zugehörige Beschreibung offenbart ist. Die ältere Anmeldung wird voll umfänglich in den Offenbarungsgehalt der vorliegenden Anmeldung einbezogen. Die Spindelmutter 3, welche in einem nicht dargestellten Gehäuse gelagert und in Drehrichtung antreibbar ist, steht über das Muttergewinde 3a mit dem Spindelgewinde 2a in Eingriff und bewirkt eine Axialverschiebung der Spindel 2, welche - was nicht dargestellt ist - am Verdrehen gehindert ist. Zwischen den Flanken des Spindelgewindes 2a und des Muttergewindes 3a, welche vorzugsweise als Trapezgewinde ausgebildet sind, besteht fertigungsbedingt ein Axialspiel, welches durch die Erfindung beseitigt oder minimiert werden soll. Hierzu ist ein Gewindering 4 vorgesehen, welcher ein Innengewinde 4a aufweist, welches mit dem Spindelgewinde 2a in Eingriff steht. Der Gewindering 4 ist axial beweglich in einer Bohrung (ohne Bezugszahl) der Spindelmutter 3 gleitend angeordnet und - was in Fig. 2 dargestellt ist - in Drehrichtung mit der Spindelmutter 3 gekoppelt. Beiderseits des Gewinderinges 4 sind eine erste Elastomer-Scheibe 5 und eine zweite Elastomer-Scheibe 6 angeordnet. Die Elastomer-Scheiben 5, 6 sind Scheiben, welche aus einem elastomeren Werkstoff, beispielsweise Gummi bestehen und in Axialrichtung, d. h. in Richtung der Spindelachse a verformbar sind. Die Spindelmutter 3 weist im Bereich der ersten Elastomer-Scheibe 5 ein als Bund 3b ausgebildetes Axial-Widerlager 3b auf, an welchem sich die erste Elastomer-Scheibe 5 abstützt. In die Spindelmutter 3, welche stirnseitig ein Innengewinde 3c aufweist, ist ein Einstellring 7, welcher ein Außengewinde 7a aufweist, eingeschraubt. Der Einstellring 7 weist eine Planfläche 7b auf, welche an der zweiten Elastomer-Scheibe 6 anliegt. Durch das Einschrauben des Einstellringes 7 in die Spindelmutter 3 werden die erste und die zweite Elastomer-Scheibe 5, 6 in axialer Richtung verformt und somit elastisch verspannt. Der Gewindering 4 wird somit in beiden axialen Richtungen mit der Vorspannung, resultierend aus der Verformung der beiden Elastomer-Scheiben 5, 6, beaufschlagt. Damit wird eine Anlage und Verspannung der Flanken des Spindelgewindes 2a und des Muttergewindes 3a erreicht, was zur Beseitigung des Axialspiels führt. Der Einstellring 7 ist durch ein als verformbarer Ring 8 ausgebildetes Sicherungselement 8 gegen ein Losdrehen gesichert. Dabei greift der Ring 8 einerseits formschlüssig in den Einstellring 7 (was genauer in Fig. 2 erkennbar ist) sowie andererseits in eine Mitnahmefläche (in Fig. 1 ohne Bezugszahl) der Spindelmutter 3 ein.

Fig. 2 zeigt den Spindelantrieb 1 in einer Explosivdarstellung, wobei für gleiche Teile gleiche Bezugszahlen wie in Fig. 1 verwendet werden. Die Spindel 2, welche mit ihrem ersten Ende in die Spindelmutter 3 einschraubbar ist, weist an ihrem anderen Ende ein Keilwellenprofil 10 auf, welches als Schublager und Verdrehsicherung gegenüber einem nicht dargestellten Aktuatorgehäuse dient. Der Gewindering 4, welcher auf seinem Umfang eine halbzylinderförmige Ausnehmung 4b aufweist, wird über einen Zylinderstift 9 gegen Verdrehen gegenüber der Spindelmutter 3 gesichert, wobei der Zylinderstift 9 (was nicht dargestellt ist) in eine entsprechende Ausnehmung in der Spindelmutter 3 eingreift. Der Einstellring 7 weist auf seinem Umfang Sechskantflächen 7c auf, an welchen ein entsprechendes Werkzeug zum Verdrehen des Einstellringes 7 angesetzt werden kann. Der verformbare Ring 8, auch Sicherungsring 8 genannt, weist auf seinem Umfang eine Einprägung 8a auf, welche in eine entsprechende Vertiefung 8b am Umfang der Spindelmutter 3 eingreift. Der Sicherungsring 8 ist somit durch partielle Verformung auf dem Umfang, so genanntes Vercrimpen, gegen Verdrehen gegenüber der Spindelmutter 3 gesichert. Der Sicherungsring 8 kann zusätzlich - was nicht dargestellt ist - als Träger für ein Abstreifelement dienen, welches ein Austreten von Schmierstoff aus dem Fettraum der Spindelmutter 3 verhindert.

### Bezugszeichen

- 1: Spindelantrieb
- 2: Spindel
- 2a: Spindelgewinde
- 3: Spindelmutter
- 3a: Muttergewinde
- 3b: Axial-Widerlager
- 3c: Innengewinde
- 4: Gewindering
- 4a: Innengewinde
- 4b: Ausnehmung
- 5: erste Elastomer-Scheibe
- 6: zweite Elastomer-Scheibe
- 7: Einstellring
- 7a: Außengewinde
- 7b: Planfläche
- 7c: Sechskantfläche
- 8: Sicherungselement
- 8a: Einprägung
- 8b: Vertiefung
- 9: Zylinderstift
- 10: Keilwellenprofil

- a: Spindelachse

## Patentansprüche

1. Aktuator mit einem Spindelantrieb (1) für eine Hinterachslenkung, aufweisend eine Spindel (2) mit einem Spindelgewinde (2a) sowie eine Spindelmutter (3) mit einem Muttergewinde (3a), wobei das Spindelgewinde (2a) und das Muttergewinde (3a) als Bewegungsgewinde ausgebildet sind und die in Drehrichtung antreibbare Spindelmutter (3) mit der axial verschiebbaren Spindel (2) über das Bewegungsgewinde in Eingriff steht, wobei das Spindelgewinde (2a) und das Muttergewinde (3a) durch ein Spannelement (4) in Längsrichtung der Spindel (2) gegeneinander verspannt sind, **dadurch gekennzeichnet, dass** das Spannelement als Gewindering (4) mit einem Innengewinde (4a) ausgebildet ist, welches mit dem Spindelgewinde (2a) in Eingriff steht, wobei der Gewindering (4) über mindestens ein Federelement (5, 6) gegenüber der Spindelmutter (3) abgestützt ist und wobei das mindestens eine Federelement (5, 6) aus einem Elastomer gebildet ist.

2. Aktuator nach Anspruch 1, **dadurch gekennzeichnet, dass** das mindestens eine Federelement als Elastomer-Scheibe (5, 6) ausgebildet ist, welche zwischen der Spindelmutter (3) und dem Gewindering (4) angeordnet ist.

3. Aktuator nach Anspruch 1 oder 2, **dadurch gekennzeichnet, dass** der Gewindering (4) axial gleitend in der Spindelmutter (3), jedoch drehfest gegenüber der Spindelmutter (3) angeordnet ist.

4. Aktuator nach Anspruch 1, 2 oder 3, **dadurch gekennzeichnet, dass** die Spindelmutter (3) ein Axial-Widerlager (3b) aufweist und dass der Gewindering (4) sowie die mindestens eine Elastomer-Scheibe (5, 6) über einen Einstellring (7) gegenüber dem Widerlager (3b) verspannbar sind.

5. Aktuator nach Anspruch 4, **dadurch gekennzeichnet, dass** der Einstellring (7) ein Außengewinde (7a) und die Spindelmutter (3) ein Innengewinde (3c) aufweisen, in welches der Einstellring (7) einschraubbar ist.

6. Aktuator nach Anspruch 5, **dadurch gekennzeichnet, dass** der Einstellring (7) mittels eines Sicherungselements (8) gegen Losdrehen gesichert ist.

7. Aktuator nach Anspruch 6, **dadurch gekennzeichnet, dass** das Sicherungselement als verformbarer Ring (8) ausgebildet ist, welcher einerseits formschlüssig in den Einstellring (7) und andererseits formschlüssig in den Umfang der Spindelmutter (3) eingreift.

8. Aktuator nach Anspruch 7, **dadurch gekennzeichnet, dass** an dem verformbaren Ring (8) ein Abstreifelement befestigt ist, welches in das Spindelgewinde (2a) eingreift.

9. Hinterachslenkung mit einem Aktuator und einem Spindeltrieb nach einem der vorhergehenden Ansprüche.

## Claims

1. Actuator with a spindle drive (1) for a rear axle steering system, comprising a spindle (2) with a spindle thread (2a), and a spindle nut (3) with a nut thread (3a), the spindle thread (2a) and the nut thread (3a) being configured as a transmission thread, and the spindle nut (3) which can be driven in a rotational direction being in engagement with the axially displaceable spindle (2) via the transmission thread, the spindle thread (2a) and the nut thread (3a) being braced against one another in the longitudinal direction of the spindle (2) by way of a stressing element (4), **characterized in that** the stressing element is configured as a threaded ring (4) with an internal thread (4a) which is in engagement with the spindle thread (2a), the threaded ring (4) being supported with respect to the spindle nut (3) via at least one spring element (5, 6), and the at least one spring element (5, 6) being formed from an elastomer.

2. Actuator according to Claim 1, **characterized in that** the at least one spring element is configured as an elastomer disc (5, 6) which is arranged between the spindle nut (3) and the threaded ring (4).

3. Actuator according to Claim 1 or 2, **characterized in that** the threaded ring (4) is arranged such that it slides axially in the spindle nut (3) but is fixed in terms of rotation with respect to the spindle nut (3).

4. Actuator according to Claim 1, 2 or 3, **characterized in that** the spindle nut (3) has an axial abutment (3b), and **in that** the threaded ring (4) and the at least one elastomer disc (5, 6) can be braced against the abutment (3b) via an adjusting ring (7).

5. Actuator according to Claim 4, **characterized in that** the adjusting ring (7) has an external thread (7a), and the spindle nut (3) has an internal thread (3c), into which the adjusting ring (7) can be screwed.

6. Actuator according to Claim 5, **characterized in that** the adjusting ring (7) is secured by means of the securing element (8) against loosening.

7. Actuator according to Claim 6, **characterized in that** the securing element is configured as a deformable ring (8) which engages firstly in a positively locking manner into the adjusting ring (7) and engages secondly in a positively locking manner into the circumference of the spindle nut (3).

8. Actuator according to Claim 7, **characterized in that** a wiper element which engages into the spindle thread (2a) is fastened to the deformable ring (8).

9. Rear axle steering system with an actuator and a spindle drive according to one of the preceding claims.

## Revendications

1. Actionneur comprenant un entraînement de broche (1) pour une direction d'essieu arrière, présentant une broche (2) comprenant un filetage de broche (2a) ainsi qu'un écrou de broche (3) comprenant un filetage d'écrou (3a), le filetage de broche (2a) et le filetage d'écrou (3a) étant réalisés sous forme de filetage de déplacement et l'écrou de broche (3) entraînable dans la direction de rotation étant en prise avec la broche (2) coulissable axialement par l'intermédiaire du filetage de déplacement, le filetage de broche (2a) et le filetage d'écrou (3a) étant serrés l'un contre l'autre dans la direction longitudinale de la broche (2) par un élément de serrage (4), **caractérisé en ce que** l'élément de serrage est réalisé sous forme de bague filetée (4) comprenant un filetage intérieur (4a), qui est en prise avec le filetage de broche (2a), la bague filetée (4) étant soutenue par rapport à l'écrou de broche (3) par l'intermédiaire d'au moins un élément de ressort (5, 6), et l'au moins un élément de ressort (5, 6) étant formé en un élastomère.

2. Actionneur selon la revendication 1, **caractérisé en ce que** l'au moins un élément de ressort est réalisé sous forme de rondelle en élastomère (5, 6), qui est agencée entre l'écrou de broche (3) et la bague filetée (4).

3. Actionneur selon la revendication 1 ou 2, **caractérisé en ce que** la bague filetée (4) est agencée de manière à pouvoir glisser axialement dans l'écrou de broche (3), mais toutefois de manière immobile en rotation par rapport à l'écrou de broche (3).

4. Actionneur selon la revendication 1, 2 ou 3, **caractérisé en ce que** l'écrou de broche (3) présente un contre-appui axial (3b) et **en ce que** la bague filetée (4) ainsi que l'au moins une rondelle en élastomère (5, 6) peuvent être serrées par rapport au contre-appui (3b) par l'intermédiaire d'une bague de réglage (7).

5. Actionneur selon la revendication 4, **caractérisé en ce que** la bague de réglage (7) présente un filetage extérieur (7a) et l'écrou de broche (3) un filetage intérieur (3c), dans lequel la bague de réglage (7) peut être vissée.

6. Actionneur selon la revendication 5, **caractérisé en ce que** la bague de réglage (7) est bloquée contre le desserrage au moyen d'un élément de blocage (8).

7. Actionneur selon la revendication 6, **caractérisé en ce que** l'élément de blocage est réalisé sous forme de bague déformable (8), qui s'engage d'une part par complémentarité de forme dans la bague de réglage (7) et d'autre part par complémentarité de forme dans la périphérie de l'écrou de broche (3).

8. Actionneur selon la revendication 7, **caractérisé en ce qu'**un élément racleur est fixé à la bague déformable (8), lequel s'engage dans le filetage de broche (2a).

9. Direction d'essieu arrière comprenant un actionneur et un entraînement de broche selon l'une quelconque des revendications précédentes.
